# EUROPÄISCHE PATENTSCHRIFT

(11) **EP 2 687 351 B1**
(45) Veröffentlichungstag und Bekanntmachung des Hinweises auf die Patenterteilung: **02.09.2015**
(21) Anmeldenummer: 13171944.5
(22) Anmeldetag: 14.06.2013
(51) Int. Cl.: B29C 49/36, B29C 49/64

(54) **Blasformmaschine mit innen liegendem Temperiergerät**
Blow moulding machine with an internal tempering device
Machine de formage par soufflage dotée d'un appareil de thermorégulation interne

(30) Priorität: 20.07.2012 DE 102012212773
(43) Veröffentlichungstag der Anmeldung: 22.01.2014
(73) Patentinhaber: Krones AG, 93073 Neutraubling (DE)
(72) Erfinder: Höllriegl, Thomas, 93073 Neutraubling (DE); Brunner, Andreas, 93073 Neutraubling (DE)
(74) Vertreter: Grünecker Patent- und Rechtsanwälte PartG mbB

(56) Entgegenhaltungen:
- DE-A1- 10 142 988
- DE-A1- 19 727 278
- DE-A1-102010 028 253
- DE-U1- 20 309 576
- US-A1- 2010 327 474

## Beschreibung

Die Erfindung betrifft eine Blasformmaschine mit einem Temperiergerät und ein entsprechendes Verfahren zum Temperieren von Blasformen und deren Aufnahmevorrichtung (Formträger) einer Blasformmaschine.

### Stand der Technik

Aus dem Stand der Technik sind Blasformmaschinen bekannt. Da insbesondere die Blasformen gekühlt und die Vorformlinge erwärmt werden müssen, ist der Gebrauch von Heizstationen und Kühlkörpern im Zusammenhang mit Blasmaschinen z.B. aus der DE 20 309 576 U1 bekannt. Diese beschreibt eine Blasmaschine zum Herstellen von Hohlkörpern aus thermoplastischem Kunststoff, wobei eine Heizstation zum Erwärmen der Vorformlinge und Kühlmittel zum Kühlen der Blasform vorgesehen sind. Das Kühlmittel wird über ein Kühlaggregat bereitgestellt, das, im Vergleich zu den Abmessungen der Blasmaschine, in großer Entfernung von der Blasmaschine angeordnet ist. Das bewirkt jedoch einen gewissen Platzaufwand und führt zu Leistungsverlusten während des Transports der Kühlflüssigkeit.

Weiterhin zeigt die DE 10 2010 028 253 A1 eine Blasmaschine mit einem zentralen Temperiergerät, das entweder im drehenden oder im stehenden Teil der Maschine angeordnet sein kann. Es kann weiterhin außerhalb der Blasformmaschine angeordnet sein. Aufgrund langer Leitungswege des Kühlmediums zu den einzelnen Blasformen ist eine genaue Einstellung der Mediumstemperatur jedoch schwierig.

Ferner offenbart die DE 101 42 988 A1 eine Verteilungseinrichtung zum Verteilen von Kühlmedien an einzelne Blasstationen einer Blasformmaschine. Aufgrund der Anordnung des Temperiergeräts in einer Entfernung zur eigentlichen Blasmaschine ist es auch hier schwierig, eine genaue Temperierung des Mediums auf eine gewünschte Temperatur zu erreichen.

### Aufgabe der Erfindung

Der Erfindung liegt die Aufgabe zugrunde, Blasmaschinen hinsichtlich der Temperierung ihrer Blasformen zu verbessern.

### Lösung

Die Aufgabe wird erfindungsgemäß durch die Blasformmaschine nach Anspruch 1 und das Verfahren nach Anspruch 6 gelöst.

Die Unteransprüche beinhalten zweckmäßige Ausgestaltungen der Erfindung.

Die Erfindung zeichnet sich dadurch aus, dass die Blasformmaschine, die einen stehenden und einen drehenden Teil mit Blasformen sowie ein Temperiergerät zur Temperierung der Blasformen umfasst, dadurch gekennzeichnet ist, dass das Temperiergerät innerhalb der Blasformmaschine angeordnet ist. Dadurch wird zum Einen erreicht, dass eine erhebliche Platzersparnis realisiert werden kann, da beispielsweise keine Leitungen außerhalb der Blasformmaschine zum Transport der Kühlflüssigkeit vom Temperiergerät zu den einzelnen Blasformen nötig sind. Zum Anderen kann durch die Anordnung des Temperiergeräts direkt innerhalb der Blasformmaschine eine Veränderung der Temperatur des Mediums während des Transports zur Blasform effektiv reduziert oder sogar vermieden werden. Dadurch werden aufwändige Isolierungen der entsprechenden Leitungen und Zwischenstationen zum Wiederaufheizen oder Abkühlen zum Teil oder vollständig unnötig.

In einer Ausführungsform ist die Blasformmaschine dadurch gekennzeichnet, dass das Temperiergerät ein Heizelement, ein Kühlelement, eine Steuereinheit, die in die Maschinensteuerung integriert sein kann, eine Wasserpumpe, eine Kühlwasserversorgung und Verbindungen des Temperiergeräts zu einer, vorzugsweise allen Blasformen der Blasformmaschine umfasst. Durch die Anordnung sämtlicher für die Temperierung und die Steuerung der Temperierung notwendigen Komponenten innerhalb der Blasformmaschine kann die Temperierung nicht nur ökonomischer und platzsparender erfolgen, sondern insbesondere durch das Anordnen der Steuereinheit innerhalb der Blasformmaschine brauchen entsprechende Verbindungen (beispielsweise Kabel und Rohr, bzw. Schlauchleitungen) nicht mehr durch die Produktionshalle, in der die Blasformmaschine angeordnet ist, verlegt werden und somit können Risiken wie beispielsweise die Beschädigung entsprechender Leitungen vermieden werden.

In einer Ausführungsform ist die Blasformmaschine dadurch gekennzeichnet, dass die Steuereinheit geeignet ist, die Temperatur des in dem Temperiergerät verwendeten Mediums so zu steuern, dass die Bildung von Kondenswasser reduziert, vorzugsweise vermieden werden kann. Die Vermeidung der Bildung von Kondenswasser kann erheblich die Standzeit der Blasformmaschine verbessern, da beispielsweise durch Kondenswasser an Verbindungsrohren Rost oder andere Materialbeeinträchtigungen die Funktionsfähigkeit der Blasformmaschine stören können. Des Weiteren wird die Kontaminierung durch Mikroorganismen erschwert, da die nötige Feuchtigkeit an den Oberflächen fehlt.

In einer weiteren Ausführungsform ist zumindest eines von dem Heizelement, dem Kühlelement, der Steuereinheit, der Kühlwasserversorgung, der Wasserpumpe, den Verbindungen und der Steuereinheit im stehenden Teil der Blasformmaschine vorgesehen und die übrigen im drehenden Teil der Blasformmaschine. Eine entsprechende Aufteilung der Komponenten kann vorteilhaft sein, da beispielsweise ein Vorsehen des Kühlelements und der Verbindungen im drehenden Teil der Blasformmaschine flexible Verbindungen zwischen dem Kühlelement und den Verbindungen zu den Blasformen überflüssig macht.

In einer Ausführungsform zeichnet sich die Blasformmaschine dadurch aus, dass ein Sekundärheizelement im Temperiergerät vorgesehen ist, das geeignet ist, die Temperatur des verwendeten Mediums auf eine höhere Temperatur anzuheben. Dieses Sekundärheizelement wird beispielsweise genutzt, um Blasformen schnell auf Einsatztemperatur zu bringen.

Unter Verwendung beispielsweise dieser Vorrichtung lässt sich ein Verfahren zum Temperieren von Blasformen einer Blasformmaschine verwirklichen, wobei das Verfahren dadurch gekennzeichnet ist, dass das Temperieren der Blasformen durch ein durch das in der Blasmaschine angeordnete Temperiergerät befördertes Medium vorgenommen wird. Mit Hilfe dieses entsprechenden Verfahrens lassen sich erhebliche Platzersparnisse und insbesondere Energieersparnisse erreichen.

In einer Ausführungsform ist das Verfahren dadurch gekennzeichnet, dass durch ein im Temperiergerät angeordnetes Sekundärheizelement die Temperatur des Mediums auf eine Temperatur angehoben wird, bei der die Bildung von Kondenswasser reduziert, vorzugsweise vermieden wird, bevor die Blasformmaschine in Betrieb genommen wird. Dadurch kann erreicht werden, dass das Medium bereits vor Inbetriebnahme der Blasformmaschine auf einer geeigneten Temperatur ist und dementsprechend kann eine verkürzte Anlaufzeit der Blasformmaschine realisiert werden.

In einer weiteren Ausführungsform ist das Verfahren dadurch gekennzeichnet, dass zur Stabilisierung der Temperatur des Mediums auf eine Solltemperatur Kaltwasser zugegeben wird. Verändert sich die Temperatur des Mediums, beispielsweise durch Wärmeaufnahme durch die Blasform, kann durch das Kaltwasser erreicht werden, dass es schnell zu einer Reduktion der Temperatur auf die gewünschte Solltemperatur kommt.

In einer weiteren Ausführungsform wird das Kaltwasser in Abhängigkeit von der Temperatur der Blasform zugegeben. So lässt sich eine gezielte Steuerung der Kaltwasserzufuhr erreichen und eine Stabilisierung der Solltemperatur ist angepasst an die momentanen Abläufe in der Blasformmaschine.

### Kurze Figurenbeschreibung

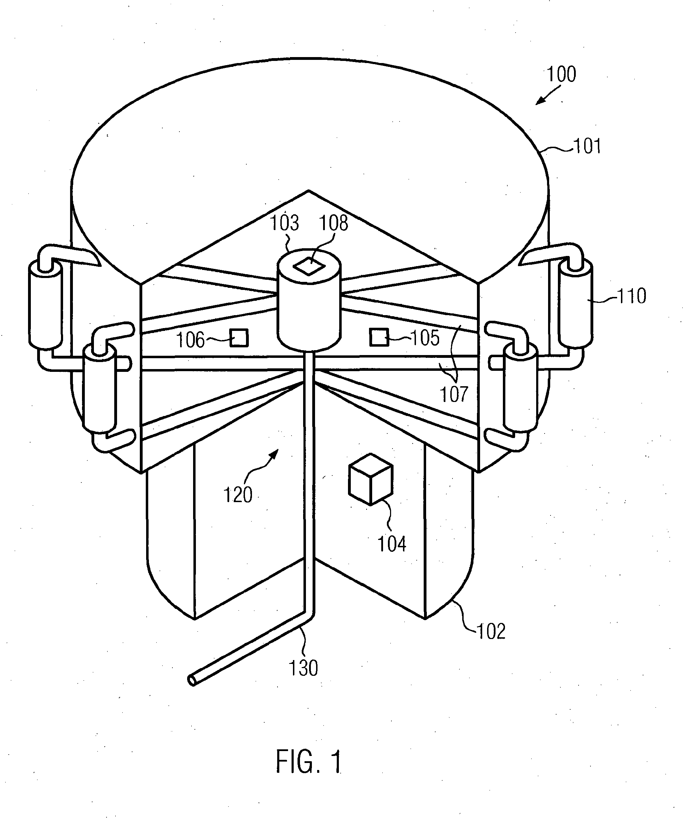

Fig. 1 ist eine schematische Darstellung einer erfindungsgemäßen Blasformmaschine

### Ausführliche Figurenbeschreibung

In Fig. 1 ist eine erfindungsgemäße Blasformmaschine 100 dargestellt. Diese verfügt über einen stehenden Teil 102 und einen sich drehenden Teil 101. Am drehenden Teil 101 der Blasformmaschine 100 sind die Blasformen 110 angeordnet. Während des Blasformverfahrens ist es zum Einen nötig, die Formen zu temperieren, so dass der eingegebene Kunststoff eine entsprechende Form und Eigenschaften annehmen kann. Andererseits ist es nötig, anschließend die Blasformen möglichst schnell zu kühlen, so dass z.B. ein Formwechsel durchgeführt werden kann. Um das zu gewährleisten, ist ein Temperiergerät 120 vorgesehen. Es kann erfindungsgemäß innerhalb sowohl der stehenden als auch des drehenden Teils der Blasformmaschine 102 bzw. 101 angeordnet sein. Es umfasst eine Kühlwasserversorgung 103, die über eine Zuleitung 130 mit einer externen Wasserversorgung verbunden sein kann. Ferner sind Heiz- und Kühlelemente 105 bzw. 106 vorgesehen. Sie dienen der Erwärmung bzw. Abkühlung des Mediums, während es durch die Leitungen 107 den Blasformen und deren Aufnahmevorrichtung zu- bzw. abgeführt wird. Die Heizelement 105 bzw. Kühlelemente 106 sind hier nur schematisch dargestellt, da es diverse Möglichkeiten der Ausführungen gibt. So kann beispielsweise vorgesehen sein, dass die Heiz- und Kühlelemente 105 bzw. 106 konzentrisch um die Zu- bzw. Ableitungen 107 angeordnet sind und so auf der gesamten Strecke eine Erwärmung bzw. Abkühlung vornehmen können. Andererseits kann auch vorgesehen sein, dass im stehenden Teil 102 der Blasformmaschine 100 Heiz- und Kühlelemente 105 bzw. 106 angeordnet sind. Die Anordnung der Komponenten kann so erfolgen, dass ein Teil des Systems auf Prozesstemperatur gehalten wird, wobei gleichzeitig die Blasformen schnell heruntergekühlt werden um z.B. einen Formenwechsel durchzuführen. Anschließend werden die Blasformen wieder auf Prozesstemperatur temperiert. Diese Anordnung verringert die Wiederanfahrzeit der Maschine. Auch die Ausgestaltung der Heizelemente 105 bzw. Kühlelemente 106 kann sehr unterschiedlich sein. So kann das Heizelement 105 beispielsweise als Mikrowellenquelle vorgesehen sein, wohingegen das Kühlelement derart vorgesehen sein kann, dass zunächst ein Regelventil vorgesehen ist, das das warme Wasser aus dem Temperierkreislauf in einen Rücklauf befördert. Gleichzeitig kann beispielsweise durch ein Rückschlagventil Kaltwasser dem System zugeführt werden, womit die gesamte Mediumstemperatur sinkt.

Zusätzlich kann ein Sekundärheizelement 108 vorgesehen sein. Es kann beispielsweise an der Kühlwasserversorgung 103 oder bereits an der Zuleitung 130 angeordnet sein. Es dient der Erwärmung des Mediums auf eine Temperatur, bei der die Bildung von Kondenswasser reduziert bzw. vorzugsweise vermieden werden kann.

Die in Fig. 1 dargestellte Anordnung der Bestandteile des Temperiergeräts 120 ist keinesfalls zwingend. Wie bereits erwähnt, kann beispielsweise das Heizelement und/oder das Kühlelement 105 bzw. 106 auch im stehenden Teil 102 der Blasformmaschine 100 angeordnet sein. Umfasst das Kühlelement 106 ein Ventil zur Ausleitung von Warmwasser und ein Ventil zum Einleiten von Kaltwasser, so kann auch vorgesehen sein, dass Teile des Kühlelements 106 im stehenden Teil 102 und andere Teile im sich drehenden Teil 101 der Blasformmaschine 100 angeordnet sind. Auch die Anordnung des Sekundärheizelements 108 kann verändert werden.

So kann das Sekundärheizelement beispielsweise auch am unteren Ende oder im seitlichen, rückwärtigen Bereich des stehenden Teils 102 der Blasformmaschine 100 angeordnet sein, um die Mediumstemperatur des Kühlwassers aus der Zuleitung 130 bereits zu erhöhen. Ebenso ist denkbar, die Kühlwasserversorgung 103 ebenfalls in dem stehenden Teil 102 der Blasformmaschine 100 anzuordnen. In diesem Fall ist eine, wie in Fig. 1 dargestellte zentrale Anordnung der Kühlwasserversorgung 103 nicht notwendig und sie könnte prinzipiell in beliebiger Position im stehenden Teil 102 der Blasformmaschine 100 angebracht sein. Eine nicht zentrale Anordnung wäre auch im drehenden Teil 101 der Blasformmaschine 100 möglich.

## Patentansprüche

1. Blasformmaschine (100) mit einem stehenden (102) und einem drehenden Teil (101) mit Blasformen (110), umfassend ein Temperiergerät (120) zur Temperierung der Blasformen (110) mit Hilfe eines Mediums, **dadurch gekennzeichnet, dass** das Temperiergerät (120) innerhalb der Blasformmaschine (100) angeordnet ist, wobei das Temperiergerät (120) ein Heizelement (105), ein Kühlelement (106), eine Pumpe, eine Steuereinheit (104), eine Kühlwasserversorgung (103) und Verbindungen (107) des Temperiergeräts (120) zu einer, vorzugsweise allen Blasformen (110) der Blasformmaschine (100) umfasst.

2. Blasformmaschine (100) nach Anspruch 1, **dadurch gekennzeichnet, dass** die Steuereinheit (120) in eine Maschinensteuerung integriert ist.

3. Blasformmaschine (100) nach Anspruch 1, **dadurch gekennzeichnet, dass** die Steuereinheit (104) geeignet ist, die Temperatur des in dem Temperiergerät (120) verwendeten Mediums so zu steuern, dass die Bildung von Kondenswasser reduziert, vorzugsweise vermieden werden kann.

4. Blasformmaschine (100) nach einem der Ansprüche 1 bis 3, **dadurch gekennzeichnet, dass** die Steuereinheit (120) ein oder mehrere Prozesskreisläufe regeln kann.

5. Blasformmaschine nach einem der Ansprüche 1 bis 4, **dadurch gekennzeichnet, dass** wenigstens eines von dem Heizelement (105), dem Kühlelement (106), der Steuereinheit (104), der Kühlwasserversorgung (103), den Verbindungen (107) im stehenden Teil (102) der Blasformmaschine (100) vorgesehen ist und die übrigen im drehenden Teil (101) der Blasformmaschine (100) vorgesehen sind.

6. Blasformmaschine (100) nach einem der Ansprüche 1 bis 5, **dadurch gekennzeichnet, dass** ein Sekundärheizelement (108) im Temperiergerät (120) vorgesehen ist, das geeignet ist, die Temperatur des verwendeten Mediums auf eine Temperatur anzuheben, bei der die Bildung von Kondenswasser reduziert, vorzugsweise vermieden werden kann.

7. Verfahren zum Temperieren von Blasformen (110) einer Blasformmaschine (100) mit Hilfe eines in der Blasformmaschine (100) angeordneten Temperiergeräts (120) gemäß einem der Ansprüche 1 bis 6, wobei das Temperieren der Blasformen (110) durch ein durch das Temperiergerät (120) befördertes Medium vorgenommen wird.

8. Verfahren zum Temperieren von Blasformen (110) nach Anspruch 7, **dadurch gekennzeichnet, dass** durch ein im Temperiergerät (120) angeordnetes Sekundärheizelement (108) die Temperatur des Mediums auf eine Temperatur angehoben wird, bei der die Bildung von Kondenswasser reduziert, vorzugsweise vermieden wird, bevor die Blasformmaschine (100) in Betrieb genommen wird.

9. Verfahren zum Temperieren von Blasenformen (110) nach Anspruch 7 oder 8, **dadurch gekennzeichnet, dass** zur Stabilisierung der Temperatur des Mediums auf eine Solltemperatur Kaltwasser zugegeben wird

10. Verfahren zum Temperieren von Blasformen (110) nach Anspruch 9, **dadurch gekennzeichnet, dass** Kaltwasser in Abhängigkeit von der Temperatur der Blasformen (110) zugegeben wird.

## Claims

1. Blow molding machine (100) with a stationary (102) and a rotating part (101) with blow molds (110), comprising a tempering device (120) for tempering said blow molds by use of a medium, **characterized in that** said tempering device (120) is disposed within said blow molding machine (100), wherein the tempering device (120) comprises a heating element (105), a cooling element (106), a pump, a control unit (104), a cooling water supply (103), and connections (107) of said tempering device (120) to one, preferably to all blow molds (110) of said blow molding machine (100).

2. Blow molding machine (100) according to claim 1, **characterized in that** said control unit (120) is integrated into a machine control unit.

3. Blow molding machine (100) according to claim 1, **characterized in that** said control unit (104) is adapted to control the temperature of said medium used in said tempering device (120), such that formation of condensate can be reduced, preferably be avoided.

4. Blow molding machine (100) according to one of the claims 1 to 3, **characterized in that** said control unit (120) can control one or multiple process circuits.

5. Blow molding machine according to one of the claims 1 to 4 **characterized in that** at least one of said heating element (105), said cooling element (106), said control unit (104), said cooling water supply (103), said connections (107) is provided in said stationary part (102) of said blow molding machine (100) and the others are provided in said rotating part (101) of said blow molding machine (100).

6. Blow molding machine (100) according to one of the claims 1 to 5, **characterized in that** a secondary heating element (108) is provided in said tempering device (120) and adapted to raise the temperature of said employed medium to a temperature at which formation of condensate can be reduced, preferably be avoided.

7. Method for tempering blow molds (110) of a blow molding machine (100) using a tempering device (120) according to claims 1 to 6 being arranged in said blow molding machine (100), wherein said tempering of said blow molds (110) is performed by a medium being conveyed through said tempering device (120).

8. Method for tempering blow molds (110) according to claim 7, **characterized in that** a secondary heating element (108) disposed in said tempering device (120) raises the temperature of said medium to a temperature at which formation of condensate is reduced, preferably is avoided, prior to setting said blow molding machine (100) into operation.

9. Method for tempering blow molds (110) according to claim 7 or 8, **characterized in that** cold water is added to stabilize the temperature of said medium at a target temperature.

10. Method for tempering blow molds (110) according to claim 9, **characterized in that** cold water is added in dependency on the temperature of said blow molds (110).

## Revendications

1. Machine de moulage par soufflage (100) avec une partie fixe (102) et une partie tournante (101) ainsi qu'avec des moules de soufflage (110), comprenant un appareillage de thermorégulation (120) pour tempérer les moules de soufflage (110) à l'aide d'un fluide, **caractérisée en ce que** l'appareillage de thermorégulation (120) est agencé à l'intérieur de la machine de moulage par soufflage (100), l'appareillage de thermorégulation (120) comprenant un élément chauffant (105), un élément de refroidissement (106), une pompe, une unité de commande (104), une alimentation en eau de refroidissement (103) et des liaisons (107) de l'appareillage de thermorégulation (120) à un, de préférence à tous les moules de soufflage (110) de la machine de moulage par soufflage (100).

2. Machine de moulage par soufflage (100) selon la revendication 1, **caractérisée en ce que** l'unité de commande (120) est intégrée à une commande de machine.

3. Machine de moulage par soufflage (100) selon la revendication 1, **caractérisée en ce que** l'unité de commande (104) est adaptée à commander la température du fluide utilisé dans l'appareillage de thermorégulation (120), de manière à permettre la réduction, de préférence de manière à empêcher la formation d'eau de condensation.

4. Machine de moulage par soufflage (100) selon l'une des revendications 1 à 3, **caractérisée en ce que** l'unité de commande (120) est en mesure de réguler un ou plusieurs circuits de processus.

5. Machine de moulage par soufflage selon l'une des revendications 1 à 4, **caractérisée en ce qu'**au moins l'un des éléments parmi l'élément chauffant (105), l'élément de refroidissement (106), l'unité de commande (104), l'alimentation en eau de refroidissement (103), les liaisons (107), est prévu dans la partie fixe (102) de la machine de moulage par soufflage (100), et les autres éléments sont prévus dans la partie tournante (101) de la machine de moulage par soufflage (100).

6. Machine de moulage par soufflage (100) selon l'une des revendications 1 à 5, **caractérisée en ce qu'**il est prévu dans l'appareillage de thermorégulation (120), un élément chauffant secondaire (108), qui est adapté à élever la température du fluide utilisé, à une température qui permet la réduction, de préférence permet d'empêcher la formation d'eau de condensation.

7. Procédé pour tempérer des moules de soufflage (110) d'une machine de moulage par soufflage (100), à l'aide d'un appareillage de thermorégulation (120) selon l'une des revendications 1 à 6 agencé dans la machine de moulage par soufflage (100), procédé d'après lequel les moules de soufflage (110) sont tempérés par un fluide véhiculé à travers l'appareillage de thermorégulation (120).

8. Procédé pour tempérer des moules de soufflage (110), selon la revendication 7, **caractérisé en ce que** grâce à un élément chauffant secondaire (108) agencé dans l'appareillage de thermorégulation (120), on élève la température du fluide à une température qui permet la réduction, de préférence permet d'empêcher la formation d'eau de condensation, avant la mise en fonctionnement de la machine de moulage par soufflage (100).

9. Procédé pour tempérer des moules de soufflage (110), selon la revendication 7 ou la revendication 8, **caractérisé en ce que** pour stabiliser la température du fluide à une température de consigne, on ajoute de l'eau froide.

10. Procédé pour tempérer des moules de soufflage (110), selon la revendication 9, **caractérisé en ce que** l'on ajoute de l'eau froide en fonction de la température des moules de soufflage (110).
